Europäisches Patentamt

European Patent Office

Office européen des brevets

(19)

(11) Numéro de publication: **0 218 665**
**B1**

(12) # FASCICULE DE BREVET EUROPÉEN

(45) Date de publication du fascicule du brevet:
15.02.89

(51) Int. Cl.⁴: **C 08 L 77/00** //
(C08L77/00, 23:08, 23:08)

(21) Numéro de dépôt: **86902430.7**

(22) Date de dépôt: **22.04.86**

(86) Numéro de dépôt international:
**PCT/FR 86/00135**

(87) Numéro de publication internationale:
**WO 86/06397 (06.11.86 Gazette 86/24)**

(54) COMPOSITIONS THERMOPLASTIQUES MULTIPHASES ET ARTICLES OBTENUS.

(30) Priorité: **23.04.85 FR 8506105**

(43) Date de publication de la demande:
**22.04.87 Bulletin 87/17**

(45) Mention de la délivrance du brevet:
**15.02.89 Bulletin 89/7**

(84) Etats contractants désignés:
**BE CH DE FR GB IT LI LU NL SE**

(56) Documents cité:
**EP-A-0 096 264**

**Chemical Abstracts, Vol. 101, No. 22, 26 November 1984, Columbus, Ohio (US), see page 41, abstract 193060m, & JP A 5991148 (MITSUI PETRO-CHEMICAL INDUSTRIES LTD.) 25 May 1984**
**Chemical Abstracts, Vol. 88, No. 8, 20 February 1978, Columbus, Ohio (US) see page 43, abstract 51741s & JP A 77117351 (ASAHI CHEMICAL INDUSTRY CO LTD) 30 March 1976**

(73) Titulaire: **NORSOLOR S.A., Tour Aurore Place des Reflets, F-92080 Paris la Defense Cédex 5 (FR)**

(72) Inventeur: **GUERDOUX, Lionel, 5, résidence le Toupin, F-76170 Lillebonne (FR)**

(74) Mandataire: **Dubost, Thierry, c/o NORSOLOR Service Propriété Industrielle B.P. 57, F-62670 Mazingarbe (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne des compositions thermoplastiques multiphases à propriété au choc améliorée et des articles obtenus à partir desdites compositions.

Des compositions à matrice de polyamides et de polymères éthyléniques sont déjà connues pour leur résistance au choc.

En particulier, le document EP-A-096 264 décrit un matériau à haute résistance à l'impact contenant:

(A) un nylon thermoplastique ayant une viscosité relative de 2,5 à 5, et

(B) de 5 à 60 % en poids, par rapport à (A), d'un copolymère ternaire non réticulé constitué de:

(a) 55 à 79,5 % en poids d'éthylène,

(b) 20 à 40 % en poids d'au moins un (méth)acrylate d'alkyle primaire ou secondaire, et

(c) 0,5 à 8% en poids d'un monomère fonctionnellement acide (par exemple l'anhydride maléique).

On connait également le document EP-A-072 480 qui décrit une composition résistante à l'impact comprenant de 50 à 90 % en poids de polyamide, de 1 à 45 % en poids d'une résine ionomère éthylénique et de 0,5 à 40 % en poids d'un copolymère éthylénique élastomérique.

Enfin le document US-A-3 373 223 décrit un alliage polymère essentiellement constitué de 25 à 90 % en poids de polyoléfine, 5 à 70 % en poids de polyamide et 1 à 10 % en poids d'un copolymère éthylène/acide (méth)acrylique.

Cependant, bien que ces compositions présentent une résistance au choc améliorée comparativement à la matrice de polyamide employée seule, cette amélioration reste cependant insuffisante pour de nombreuses applications nécessitant une résistance au choc excellente.

Le but de la présente invention consiste donc à obtenir des compositions thermoplastiques multiphases présentant une excellente résistance au choc, notamment à basse température.

Un premier objet de la présente invention concerne des compositions comprenant de 50 à 95 % en poids d'au moins une résine polyamide et de 5 à 50 % en poids d'au moins un polymère d'éthylène contenant de 0,9 à 16 % en moles de motifs dérivés de l'anhydride maléique et/ou d'au moins un acrylate ou méthacrylate d'alkyle dont le groupe alkyle a de 1 à 6 atomes de carbone, caractérisées en ce que ledit polymère d'éthylène est présent sous forme d'un mélange de copolymère éthylène/(méth) acrylate d'alkyle (A) et de terpolymère éthylène/anhydride maléique/(méth) acrylate d'alkyle (B), le rapport pondéral (A)/(B) étant compris entre 1/3 et 3.

Selon un mode de réalisation préféré de la présente invention le copolymère (A) comprend de 3 a 20 % en moles de motifs dérivés de l'acrylate ou méthacrylate d'alkyle et a un indice de fluidité (mesuré selon la norme ASTM D 1238-73) compris entre 1 et 50 dg/min. Selon un mode de réalisation préféré de la présente invention le terpolymère (B) comprend de 0,3 à 2 % en moles de motifs dérivés de l'anhydride maléique et de 0,3 a 3 % en moles de motifs dérivés d'acrylate ou méthacrylate d'alkyle et a un indice de fluidité (mesuré selon la norme ASTM D 1238-73) compris entre 1 et 50 dg/min.

On a en effet trouvé que les compositions à matrice de polyamide et à composés polyoléfiniques connues jusqu'à présent présentaient une résistance au choc améliorée mais encore insuffisante pour certaines applications. La demanderesse a trouvé que l'utilisation en tant que polymère d'éthylène d'un mélange de 25 à 75 % d'un copolymère tel que défini précédemment et de 75 à 25 % d'un terpolymère tel que défini précédemment permettait d'améliorer de façon surprenante et notable la résistance au choc des compositions connues jusqu'à présent, notamment à basse température.

Suivant l'invention, on entend par résine polyamide, de façon connue, une résine produite par condensation de quantités équimolaires d'un acide dicarboxylique saturé contenant de 4 à 12 atomes de carbone avec une diamine, la diamine contenant de 4 à 14 atomes de carbone. On peut utiliser un excès de diamine de manière à obtenir un excès de groupes terminaux amine par rapport aux groupes terminaux carboxyle dans le polyamide. Des exemples de polyamides comprennent le polyhexaméthylène adipamide (nylon 66), le polyhexaméthylène sébacamide (nylon 610) et le polyhexaméthylène dodécanoamide (nylon 612), les polyamides produits par décyclisation de lactames, c'est-à-dire le polycaprolactame, le poly-(lactame laurique), le poly-(acide 11 amino-undécanoïque), le bis(para-aminocyclohexyl) méthane dodécanamide. Il est possible aussi d'utiliser dans la présente invention des polyamides préparés par condensation d'au moins deux des polymères ci-dessus ou de leurs constituants. Ces résines ont une masse moléculaire d'au moins 5000 et, de préférence un point de fusion supérieur ou égal à 200°C.

On peut encore incorporer dans les compositions des stabilisants, des agents de démoulage, des lubrifiants, des accélérateurs de cristallisation, des plastifiants, des pigments, des colorants ou des charges minérales. Selon une variante il est ainsi possible de rigidifier les compositions décrites ci-dessus en y ajoutant une proportion importante de charges minérales, avantageusement jusqu'à 50 parties en poids d'au moins une charge minérale pour 100 parties en poids du total de résine polyamide, de copolymère et de terpolymère. La charge minérale pulvérulente ou à l'état de fibres ou plaquettes peut, par exemple, être choisie parmi les fibres de verre, les billes de verre, le mica, le talc, les argiles, les aluminates et silicates, par exemple de calcium, l'alumine, l'hydrate d'alumine, le noir de carbone, les fibres de carbone ou de bore, l'amiante, les oxyde, hydroxyde, carbonate et sulfate de magnésium ou de calcium, les oxydes de fer, antimoine, zinc, le dioxyde de titane, le sulfate de baryum, la bentonite, la terre de diatomées, le kaolin, la silice telle le quartz, le feldspath.

La composition objet de la présente invention est obtenue de façon connue par toute technique de mélangeage à l'état fondu telle que, par exemple, l'extrusion, le travail sur mélangeur interne.

Un second objet de la présente invention concerne des articles obtenus à partir d'au moins une composition décrite précédemment. Ces articles peuvent être obtenus par toutes méthodes conventionnelles utilisées dans l'industrie des thermoplastiques, notamment des articles moulés par injection, ou obtenus par extrusion (film, tuyaux, plaques, fibres,...)

Les compositions thermoplastiques multiphases obtenues dans le cadre de la présente invention possèdent une résistance au choc notablement améliorée qui les rendent particulièrement intéressantes pour toute application exigeant cette qualité, notamment dans le secteur des industries automobile et électronique, des appareils à usage domestique ou industriel, des articles de sport.

Les exemples non limitatifs sont fournis ci-après pour illustrer l'invention.

La norme utilisée pour définir la résistance au choc Charpy (exprimée en kilojoules par mètre carré) est la norme ISO R 179, sur éprouvette entaillée 4 x 6 x 50 mm$^3$ (Eprouvette type 2C). Les parties sont des parties en poids.

## Exemple 1 (comparatif)

On considère une première composition témoin constituée de 80 parties de polyamide 6 commercialisé par la Société BASF sous la marque commerciale "Ultramid B3" et de 20 parties d'un copolymère éthylène/acrylate d'éthyle d'indice de fluidité égal à 10,5 dg/min., dont la proportion en moles d'acrylate d'éthyle est égale à 7,3 %. Le mélange est effectué sur une extrudeuse TROESTER (D = 60 mm; L/D = 27) à une vitesse de 25 tours/min. et à une témpérature de 275°C. La composition obtenue est ensuite injectée sur machine NETSTAL à une température dans le fourreau de 280°C; la durée du cycle d'injection est de 18 secondes et la pression d'injection de 800 bars. La température du moule est de 20°C. Les résistances au choc R$_c$ obtenues sont exprimées en kJ/m$^2$ en fonction de la température T exprimée en °C, dans le Tableau ci-après.

## Exemple 2 (comparatif)

On prépare selon les conditions opératoires de l'exemple 1 une composition témoin constituée de:

- 80 parties du polyamide 6 utilisé à l'exemple 1
- 20 parties de terpolymère d'indice de fluidité égal à 5,2 dg/min. comprenant 1,7 % en moles d'acrylate d'éthyle et 0,8 % en moles d'anhydride maléïque.

La composition obtenue présente une résistance au choc Charpy R$_c$ exprimée en kJ/m$^2$ en fonction de la température T en °C, dans le Tableau ci-après.

## Exemple 3

On mélange selon les conditions opératoires de l'exemple 1:

- 80 parties de polyamide 6 utilisé à l'exemple 1
- 20 parties d'un polymère constitué d'une moitié par le copolymère utilisé à l'exemple 1 et pour l'autre moitié par le terpolymère utilisé à l'exemple 2.

La composition obtenue présente une résistance au choc Charpy R$_c$ exprimée en kJ/m$^2$ en fonction de la température T en °C, dans le Tableau ci-après

## Exemple 4 (comparatif)

On prépare selon les conditions opératoires de l'exemple 1 une composition témoin constituée de:

- 80 parties de polyamide 66 commercialisé par la Société BASF sous la marque commerciale "Ultramid A3"
- 20 parties du copolymère utilisé à l'exemple 1.

La composition obtenue présente une résistance au choc Charpy R$_c$ exprimée en kJ/m$^2$ en fonction de la température T en °C, dans le Tableau ci-après.

## Exemple 5 (comparatif)

On prépare selon les conditions opératoires de l'exemple 1 une composition témoin constituée de:

- 80 parties de polyamide 66 utilisé à l'exemple 4
- 20 parties du terpolymère utilisé à l'exemple 2

La composition obtenue présente une résistance au choc Charpy R$_c$ exprimée en kJ/m$^2$ en fonction de la température T en °C, dans le tableau ci-après.

## Exemple 6

On mélange selon les conditions opératoires de l'exemple 1:

- 80 parties de polyamide 66 utilisé à l'exemple 4

- 20 parties d'un polymère constitué d'une moitié par le copolymère utilisé à l'exemple 1 et pour l'autre moitié par le terpolymère utilisé à l'exemple 2.

La composition obtenue présente une résistance au choc Charpy $R_c$ exprimée en kJ/m$^2$ en fonction de la température T en °C, dans le tableau ci-apres.

**TABLEAU**
Valeurs obtenues pour $R_c$

Exemple

| T | 1 | 2 | 3 | 4 | 5 | 6 |
|-----|------|------|------|-----|-----|------|
| 20 | 8,7 | 15,9 | 27,9 | n.d | n.d | n.d |
| 0 | 7,6 | 15,0 | 18,5 | 4,0 | 7,5 | 10,0 |
| -10 | 6,4 | 13,9 | 15,8 | 3,9 | 6,4 | 8,5 |
| -20 | 6,3 | 12,6 | 14,4 | 3,9 | 5,3 | 6,8 |
| -30 | 6,3 | 10,5 | 12,4 | n.d | n.d | 5,9 |
| -40 | n.d | 9,0 | 10,4 | n.d | n.d | 5,9 |

n.d = non déterminé

**Revendications**

1. Compositions comprenant de 50 à 95 % en poids d'au moins une résine polyamide, et de 5 à 50 % en poids d'au moins un polymère d'éthylène contenant de 0,9 à 16 % en moles de motifs dérivés de l'anhydride maléique et/ou d'au moins un acrylate ou méthacrylate d'alkyle dont le groupe alkyle a de 1 à 6 atomes de carbone, caractérisées en ce que ledit polymère d'éthylène est présent sous forme d'un mélange de copolymère éthylène/(méth) acrylate d'alkyle (A) et de terpolymère éthylène/anhydride maléïque/(méth)acrylate d'alkyle (B), le rapport pondéral (A)/(B) étant compris entre 1/3 et 3.

2. Compositions selon la revendication 1 caractérisées en ce que le copolymère (A) comprend de 3 à 20 % en moles de motifs dérivés de l'acrylate ou méthacrylate d'alkyle et a un indice de fluidité compris entre 1 et 50 dg/min.

3. Compositions selon l'une des revendications 1 et 2 caractérisées en ce que le terpolymère (B) comprend de 0,3 à 2 % en moles de motifs dérivés de l'anhydride maléïque et de 0,3 à 3 % en moles de motifs dérivés d'un acrylate ou méthacrylate d'alkyle et a un indice de fluidité compris entre 1 et 50 dg/min.

4. Compositions selon l'une des revendications 1 à 3 caractérisées en ce qu'elles comprennent en outre jusqu'à 50 parties en poids d'au moins une charge minérale pour 100 parties en poids du total de résine polyamide, de copolymère et de terpolymère.

5. Articles obtenus à partir d'au moins une composition selon l'une des revendications 1 à 4.

**Claims**

1. Compositions comprising from 50 to 95 % by weight of at least one polyamide resin, and from 5 to 50 % by weight of at least one ethylene polymer containing from 0.9 to 16 mole per cent of units derived from maleic anhydride and/or at least one alkyl acrylate or methacrylate of which the alkyl group has 1 to 6 carbon atoms, characterized in that said ethylene polymer is present in the form of a mixture of ethylene/alkyl (meth)acrylate copolymer (A) and ethylene/maleic anhydride/alkyl (meth)acrylate terpolymer (B), the weight ratio (A)/(B) lying between 1/3 and 3.

2. Compositions according to claim 1 characterized in that the copolymer (A) comprises from 3 to 20 mole percent of units derived from alkyl acrylate or methacrylate and has a melt index lying between 1 and 50 dg/min.

3. Compositions according to one of claims 1 and 2 characterized in that the terpolymer (B) comprises from 0.3 to 2 mole per cent of units derived from maleic anhydride and from 0.3 to 3 mole per cent of units derived from an alkyl acrylate or methacrylate and has a melt index lying between 1 and 50 dg/min.

4. Compositions according to one of claims 1 to 3 characterized in that they additionally comprise up to 50 parts by weight of at least one mineral filler per 100 parts by weight of the total polyamide resin, copolymer and terpolymer.

5. Articles made from at least one composition according to one of claims 1 to 4.

**Patentansprüche**

1. Zusammensetzungen enthaltend 50 bis 95 Gew.-% an mindestens ein Polyamidharz und 5 bis 50 Gew.-% an mindestens ein Äthylenpolymer bestehend aus 0,9 bis 16 Mol.-% an Einheiten abstammend vom Maleinsäureanhydrid und/ oder mindestens einen Alkylacrylat oder Alkylmethacrylat dessen Alkylgruppe von 1 bis 6 Kohlenstoffatomen enthält, dadurch gekennzeichnet, daß der gennante Äthylenpolymer sich in Gestalt einer Mischung von einem Äthylen/Alkyl(meth)acrylat Copolymerisat (A) und einem Äthylen/Maleinsäureanhydrid/Alkyl(meth)acrylat Terpolymerisat (B) befindet, mit einem Verhältnis (A)/(B) stehend zwischend 1/3 und 3.

2. Zusammensetzungen nach Anspruch 1, dadurch gekennzeichnet, daß der Copolymerisat (A) zwischen 3 und 20 Mol.-% an Einheiten abstammend vom Alkylacrylat oder Alkylmethacrylat enthält und einen Fließindex zwischen 1 und 50 dg/min. besitzt.

3. Zusammensetzungen nach einem der Ansprüche 1 und 2, dadurch gekennzeichnet, daß der Terpolymerisat (B) von 0,3 bis 2 Mol.-% an Einheiten abstammend vom Maleinsäureanhydrid und 0,3 bis 3 Mol.-% an Einheiten abstammend von einem Alkylacrylat oder Alkylmethacrylat enthält, mit einem Fließindex zwischen 1 und 50 dg/min.

4. Zusammensetzungen nach einem der Ansprüche 1 bis 3, dadurch gekennzeichnet, daß sie außerdem bis auf 50 Gewichtsteilen von mindestens einem anorganischen Füllstoff für 100 Gewichtsteilen der ganze Menge von Polyamidharz, Copolymerisat und Terpolymerisat enthalten.

5. Gegenstände herkommend von mindestens einer Zusammensetzung nach einem der Ansprüche 1 bis 4.